# FASCICULE DE BREVET EUROPEEN

(11) **EP 4 313 695 B1**
(45) Date de publication et mention de la délivrance du brevet: **04.12.2024**
(21) Numéro de dépôt: 22710683.8
(22) Date de dépôt: 22.02.2022
(51) Int. Cl.: B60R 22/28, B60R 22/24, B60R 22/18

(54) **PLATINE D'ANCRAGE ET DE GUIDAGE DE CEINTURE DE SÉCURITÉ A DEFORMATION PROGRAMMEE**
SICHERHEITSGURTVERANKERUNGS- UND -FÜHRUNGSPLATTE MIT PROGRAMMIERTER VERFORMUNG
SAFETY BELT ANCHORING AND GUIDE PLATE WITH PROGRAMMED DEFORMATION

(30) Priorité: 24.03.2021 FR 2102936
(43) Date de publication de la demande: 07.02.2024
(73) Titulaire: Stellantis Auto SAS, 78300 Poissy (FR)
(72) Inventeur: BENANE, Said, 94240 L HAY LES ROSES (FR)
(86) Numéro de dépôt international: PCT/FR2022/050324
(87) Numéro de publication internationale: WO 2022/200705

(56) Documents cités:
- WO-A1-2019/243680
- DE-A1- 102010 024 096
- FR-A1- 2 736 312
- US-A1- 2003 230 908
- US-A1- 2016 075 380
- US-B1- 6 773 048

## Description

Le domaine technique concerne les platines de support d'enrouleur de ceinture conçues pour se déformer en cas de choc et les véhicules équipés de telles platines.

En matière de sécurité routière, les constructeurs d'automobiles doivent prendre en compte de multiples préoccupations et réglementations lors du développement de nouveaux véhicules afin d'assurer la sécurité des passagers du véhicule en cas de collision. Pour ce faire, la réglementation de la plupart des pays impose que chaque place assise dans le véhicule dispose d'une ceinture de sécurité conçue pour retenir le passager en cas de choc. La ceinture de sécurité et l'ensemble des éléments permettant l'ancrage de la ceinture doivent être en mesure de résister à une traction sur la ceinture de sécurité de l'ordre de 15 000 N.

Pour répondre aux exigences mentionnées précédemment, les éléments d'ancrage sont habituellement dimensionnés en conséquence et sont fixés sur la carrosserie du véhicule.

Pour les places arrière d'un véhicule, le véhicule est généralement équipé de sièges dont les dossiers sont rabattables pour permettre le chargement d'objets encombrants dans le coffre et une partie de l'habitacle. Pour de tels sièges rabattables, une première solution mise en oeuvre par les constructeurs d'automobiles consiste à fixer un enrouleur de ceinture de sécurité directement au dossier du siège, tel que décrit dans le document FR 2 736 312.

Une autre solution consiste à assurer une liaison coulissante entre la ceinture de sécurité et la partie supérieure du dossier, les ancrages de la ceinture de sécurité et/ou de l'enrouleur étant fixés à la carrosserie du véhicule.

Lorsque le véhicule subit un choc avant, la ceinture de sécurité retient le passager en appliquant un effort important sur le torse du passager du siège, à tel point que la ceinture de sécurité risque de causer des blessures. Il convient alors de limiter les efforts de la ceinture de sécurité. Pour ce faire, les constructeurs d'automobiles ont l'habitude de fixer les éléments d'ancrage sur une tôle déchirable, conçue pour se déchirer progressivement sous l'effet de la traction sur la ceinture de sécurité, en permettant au point d'ancrage de la ceinture de se déplacer sur une certaine longueur, de l'ordre de plusieurs dizaines de centimètres.

Cette solution peut s'avérer inadaptée lorsque la place disponible n'est pas suffisante et/ou lorsque la carrosserie du véhicule ne présente pas une résistance suffisante pour empêcher le déchirement de la carrosserie en lieu et place de la tôle déchirable.

Ainsi, il existe un besoin de nouveaux dispositifs d'ancrages d'une ceinture de sécurité permettant de limiter les efforts de la ceinture de sécurité sur le passager en cas de choc avant sur le véhicule, et étant adapté à toutes les carrosseries de véhicule. Le document US 2003/230908 A1 décrit une platine d'ancrage de ceinture de sécurité pour véhicule automobile conforme au préambule de la revendication 1.

La présente invention a pour objet de pallier les problèmes exposés précédemment. Dans ce contexte technique, un but de la présente invention est de fournir une platine d'ancrage de ceinture de sécurité qui permet de limiter l'encombrement de l'ensemble de la ceinture de sécurité et de ses ancrages et permettant d'éviter tout déchirement et/ou toute rupture des points de fixation.

A cet effet, la présente invention se rapporte à une platine d'ancrage de ceinture de sécurité pour véhicule automobile, comportant une première partie présentant des moyens de guidage pour guider le coulissement d'une ceinture de sécurité, la platine présentant une deuxième partie présentant des moyens de verrouillage pour verrouiller un dossier de banquette sur la platine, la platine présentant en outre une section déformable reliant les première et deuxième parties, conçue pour se déformer, sous l'effet d'une force de traction appliquée sur les moyens de verrouillage et dont l'intensité est supérieure à une valeur seuil prédéterminée, de sorte que la déformation provoque une rotation relative des première et deuxième parties pour absorber une partie de l'énergie d'un choc. La section déformable comporte une première ligne de pliure ménagée dans une tôle reliant les première et deuxième parties, la première ligne de pliure constituant un axe autour duquel la rotation relative s'effectue lors de la déformation de la section déformable. La section déformable comporte une deuxième ligne de pliure ménagée dans la tôle formant un triangle avec la première ligne de pliure et un bord latéral de la tôle. Une telle première ligne de pliure constitue une solution simple pour permettre la déformation. Les première et deuxième lignes de pliure permettent d'augmenter la résistance au déchirement du bord de la tôle de la section déformable.

L'invention concerne également un véhicule comportant au moins une platine selon l'invention.

Ainsi, la platine d'ancrage selon l'invention offre une liaison coulissante entre le dossier de banquette et la ceinture de sécurité grâce aux moyens de guidage, les moyens de verrouillage permettant de solidariser la platine au dossier de banquette. En cas de choc avant sur le véhicule, la platine d'ancrage permet de limiter les efforts de la ceinture de sécurité sur le passager grâce à la section déformable à déformation programmée : la rotation relative des première et deuxième parties, lorsque la force de traction dépasse le seuil prédéterminé, permet de réduire la tension de la ceinture de sécurité. La déformation de la section déformable permet d'absorber une partie de l'énergie transmise à la platine d'ancrage lors du choc avant. La platine d'ancrage est particulièrement adaptée à un siège de banquette présentant deux places, du type deux tiers de la largeur, puisque la ceinture du passager assis au milieu engendre un effort sur le dossier de banquette à distance du point de verrouillage du dossier, provoquant un moment de torsion sur le dossier. La rotation relative des première et deuxième parties accompagne ce moment de torsion en absorbant une partie de l'énergie.

Selon une possibilité, les première et deuxième parties sont conformées dans une tôle, ladite tôle comportant également la section déformable.

Selon un mode de réalisation, la platine comporte en outre une partie de fixation, solidaire de la première partie, conçue pour solidariser la platine à la carrosserie du véhicule.

Avantageusement, les moyens de guidage comportent un fil de sangle formé par une première tige métallique.

Avantageusement encore, les moyens de verrouillage comportent un fil de gâche formé par une deuxième tige métallique.

L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective et de face d'une platine support d'enrouleur de ceinture fixée dans un habitacle de véhicule selon l'invention ;
[Fig. 2] la figure 2, représente une vue en perspective, depuis le coffre du véhicule, de la platine d'ancrage de la figure 1.

Dans ces figures, les mêmes références sont utilisées pour désigner les mêmes éléments.

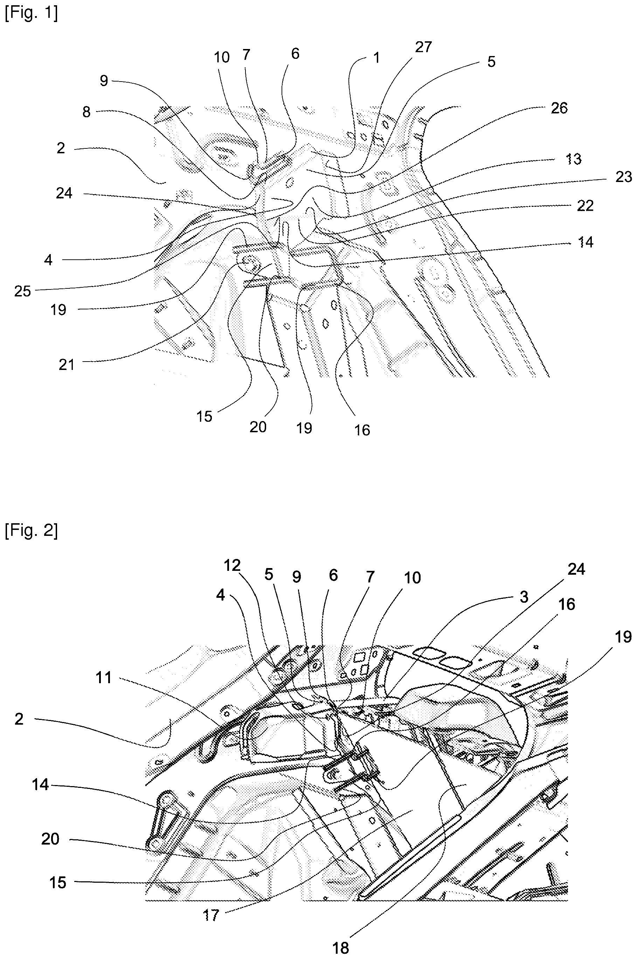

Une platine 1 d'ancrage d'une ceinture de sécurité, illustrée sur les figures, est destinée à équiper un véhicule 2 automobile selon l'invention, en partie illustré sur les figures. La platine 1 d'ancrage est conçue pour guider une ceinture de sécurité 3, représentée sur la figure 2.

La platine 1 est formée en partie par une tôle 4 métallique emboutie. La platine 1 comporte une première partie 5 qui s'étend suivant un plan sensiblement vertical lorsque la platine 1 d'ancrage est installée dans le véhicule 2.

La première partie 5 présente des moyens de guidage 6, conçus pour guider le coulissement de la ceinture de sécurité 3. Les moyens de guidage 6, par exemple, sont formés par un fil de sangle 7, disposé sur un bord 8 de la tôle 4 et constitué d'une première tige métallique 9 formant une boucle 10 ouverte et allongée, permettant d'introduire la ceinture de sécurité 3 dans la boucle 10. Le bord 8 sur lequel est disposé le fil de sangle 7 est destiné à être positionné en partie haute de la platine 1 lorsque celle-ci est installée sur le véhicule 2.

La ceinture de sécurité 2 peut s'enrouler et se dérouler d'un enrouleur de ceinture 11 disposé en regard d'une face arrière 12 de la platine 1 d'ancrage en coulissant dans le fil de sangle 7. La face arrière 12, illustrée sur la figure 2, s'entend comme la face opposée à la face avant 13, illustrée sur la figure 1, de la platine 1 faisant face à la direction normale de circulation du véhicule 2. L'enrouleur de ceinture 11 est par exemple fixé à la face arrière 12 de la platine 1 d'ancrage.

La platine 1 présente une deuxième partie 14 formée dans la tôle 4, par exemple, par emboutissage. Elle s'étend, d'une part, suivant un plan sensiblement incliné par rapport au plan de la première partie 5 et, d'autre part, présente une paroi 15 s'étendant suivant l'axe vertical et l'axe longitudinal du véhicule 2, lorsque la platine est installée dans le véhicule 2.

La deuxième partie 14 comporte des moyens de verrouillage 16 conçus pour verrouiller un dossier 17 de banquette, illustré sur la figure 2, du véhicule sur la platine 1. Le dossier 17 est mobile, en rotation entre une position d'assise, illustrée sur la figure 2, dans laquelle le passager peut s'assoir sur la banquette, et une position escamotée, dans laquelle le dossier 17 est rabattu sur la banquette. Le dossier 17, par exemple, s'étend sur les deux tiers de la largeur de la banquette, la banquette présentant un autre dossier escamotable 18, illustré sur la figure 2, s'étendant sur un tiers de la largeur de la banquette et étant également monté mobile en rotation de la même manière que le dossier 17.

Les moyens de verrouillage 16 présentent à cet effet un fil de gâche 19 formé par une deuxième tige métallique 20 formant un U. La longueur du U, faisant saillie de la face avant 13 est réglable au moyen, par exemple, d'une vis de réglage 21, visible sur les figures 1 et 2, disposée sur la paroi 15. Le fil de gâche 19 est conçu pour coopérer avec le dossier 17, par exemple grâce à une gâche (non illustrée) disposée dans le dossier 17, afin de le maintenir en position d'assise.

La platine 1 présente en outre une section déformable 22, qui relie les première 5 et deuxième 14 parties, formée également dans la tôle 4. La section déformable 22 est conçue pour se déformer, sous l'effet d'une force de traction appliquée sur les moyens de verrouillage 16 et dont l'intensité est supérieure à une valeur seuil prédéterminée, de sorte que la déformation provoque une rotation relative des première 5 et deuxième 14 parties pour absorber une partie de l'énergie d'un choc. De façon habituelle, en Europe, les réglementations exigent une valeur seuil prédéterminée de l'ordre de 15000 N.

Afin de contrôler la déformation, la section déformable 22 présente une première ligne de pliure 23 ménagée dans la tôle 4 reliant les première 5 et deuxième 14 parties. Avantageusement, la première ligne de pliure 23 est rectiligne et s'étend jusqu'à un bord latéral 24 de tôle 4 contigu à la paroi 15. La première ligne de pliure 23 constitue un axe autour duquel la rotation relative s'effectue lors de la déformation de la section déformable 22. En cas de choc avant subi par le véhicule 2, la traction exercée sur le dossier 17 et la ceinture de sécurité 3 engendre une déformation de la section déformable 22 de sorte à amener la deuxième partie 14 à se replier au moins en partie devant la première partie 5 par une rotation relative. Une rotation complète aboutirait à amener la partie de la face avant 13 de la platine 1 située sur la deuxième partie 14 en regard de la partie de la face avant 13 de la platine 1 située sur la première partie 5.

Conformément à l'invention, la section déformable 22 comporte une deuxième ligne de pliure 25 ménagée dans la tôle 4 formant un triangle 26 avec la première ligne de pliure 23 et le bord latéral 24 de la tôle 4. Avantageusement encore, la tôle 4 est emboutie dans la zone délimitée par le triangle 26 afin de former une portion conique. Cette forme conique permet de faciliter l'initiation de la déformation de la section déformable 22 en minimisant le risque de déchirure sur le bord latéral 24. Enfin, la platine 1 d'ancrage comporte en outre une portion de fixation 27, solidaire de la première partie 5, conçue pour solidariser la platine 1 à la carrosserie du véhicule 2. Par exemple, comme illustré sur la figure 1, la portion de fixation 27 est formée par un rebord de la tôle 4 sensiblement perpendiculaire au plan de la première partie 5. La portion de fixation 27 solidarise la platine 1 au véhicule 2, par exemple, par des points de soudure.

Ainsi, la platine 1 d'ancrage selon l'invention permet d'ancrer la ceinture de sécurité 3 et de retenir le dossier 17 de la banquette. En cas de choc avant subi par le véhicule 2, la traction exercée sur le dossier 17 et la ceinture de sécurité 3 engendre une déformation de la section déformable 22 de sorte à amener la deuxième partie 14 à se replier au moins en partie devant la première partie 5 par une rotation relative des première 5 et deuxième 14 parties. La déformation par rotation de la section déformable 22 permet ainsi d'absorber au moins une partie de l'énergie du choc transmise à la platine 1 et permet de réduire l'effort exercé par la ceinture de sécurité 3 sur le passager. La platine 1 permet enfin d'éviter le déchirement de la tôle 4 ou de la carrosserie du véhicule 2.

L'invention ne se limite pas au mode de réalisation de la platine de support d'enrouleur de ceinture décrit ci-avant, seulement à titre d'exemple, mais d'autres modes de réalisation peuvent être conçus par l'homme de métier sans sortir du cadre et de la portée de la présente invention définie par les revendications.

## Revendications

1. Platine (1) d'ancrage de ceinture de sécurité pour véhicule (2) automobile, comportant une première partie (5) présentant des moyens de guidage (6) pour guider le coulissement d'une ceinture de sécurité (3), la platine (1) présentant une deuxième partie (14) présentant des moyens de verrouillage (16) pour verrouiller un dossier (17) de banquette sur la platine (1), la platine (1) présentant en outre une section déformable (22) reliant les première (5) et deuxième (14) parties, conçue pour se déformer, sous l'effet d'une force de traction appliquée sur les moyens de verrouillage (16) et dont l'intensité est supérieure à une valeur seuil prédéterminée, de sorte que la déformation provoque une rotation relative des première (5) et deuxième (14) parties pour absorber une partie de l'énergie d'un choc, dont la section déformable (22) comporte une première ligne de pliure (22) ménagée dans une tôle (4) reliant les première (5) et deuxième (14) parties, la première ligne de pliure (23) constituant un axe autour duquel la rotation relative s'effectue lors de la déformation de la section déformable (22), **caractérisée en ce que** la section déformable (22) comporte une deuxième ligne de pliure (25) ménagée dans la tôle (4) formant un triangle (26) avec la première ligne de pliure (23) et un bord latéral (24) de la tôle (4).

2. Platine (1) selon l'une des revendications 1, **caractérisée en ce que** les première (5) et deuxième (14) parties sont conformées dans une tôle (4), ladite tôle (4) comportant également la section déformable (22).

3. Platine (1) selon l'une des revendications 1 à 2, **caractérisée en ce qu'**elle comporte en outre une portion de fixation (27), solidaire de la première partie (5), conçue pour solidariser la platine (1) à la carrosserie du véhicule (2).

4. Platine (1) selon l'une des revendications 1 à 3, **caractérisée en ce que** les moyens de guidage (6) comportent un fil de sangle (7) formé par une première tige métallique (9).

5. Platine selon l'une des revendications 1 à 4, **caractérisée en ce que** les moyens de verrouillage (16) comportent un fil de gâche (19) formé par une deuxième tige métallique (20).

6. Véhicule comportant au moins une platine (1) selon l'une des revendications 1 à 5.

## Patentansprüche

1. Sitzplatte (1) für einen Sicherheitsgurt (2) für ein Kraftfahrzeug mit einem ersten Teil (5) mit Führungsmitteln (6) zum Führen des Gleitens eines Sicherheitsgurtes (3), wobei die Sitzplatte (1) einen zweiten Teil (14) mit Verriegelungsmitteln (16) zum Verriegeln einer Sitzrückenlehne (17) auf der Sitzplatte (1) aufweist zusätzlich zu einem verformbaren Abschnitt (22), der das erste (5) und das zweite (14) Teil miteinander verbindet, so ausgebildet, dass er sich unter Einwirkung einer auf die Verriegelungsmittel (16) aufgebrachten Zugkraft verformt, und dessen Stärke einen vorgegebenen Schwellenwert überschreitet, sodass die Verformung eine relative Drehung des ersten (5) und zweiten (14) Teils der Energie eines Aufpralls bewirkt, Der verformbare Abschnitt (22) weist eine erste Faltlinie (22) auf, die in einem die ersten (5) und zweiten (14) Teile verbindenden Blech (4) ausgebildet ist, wobei die erste Faltlinie (23) eine Achse bildet, um die die relative Drehung bei der Verformung des verformbaren Abschnitts (22) erfolgt, **dadurch gekennzeichnet, dass** der verformbare Abschnitt eine zweite Faltlinie aufweist (25) im Blech (4) ausgebildet, das mit der ersten Falzlinie (23) ein Dreieck (26) und einen Seitenrand (24) des Bleches (4) bildet.

2. Platine (1) nach einem der Ansprüche 1, **dadurch gekennzeichnet, dass** die ersten (5) und zweiten (14) Teile in einem Blech (4) ausgebildet sind, wobei das Blech (4) auch den verformbaren Abschnitt (22) aufweist.

3. Platine (1) nach einem der Ansprüche 1 bis 2, **dadurch gekennzeichnet, dass** sie ferner einen Befestigungsabschnitt (27) aufweist, der fest mit dem ersten Teil (5) verbunden ist, der dazu ausgelegt ist, die Platine (1) mit der Fahrzeugkarosserie (2) zu verbinden.

4. Platine (1) nach einem der Ansprüche 1 bis 3, **dadurch gekennzeichnet, dass** die Führungsmittel (6) einen Gurtdraht (7) aufweisen, der durch einen ersten Metallstab (9) gebildet ist.

5. Platine nach einem der Ansprüche 1 bis 4, **dadurch gekennzeichnet, dass** die Verriegelungsmittel (16) einen Schließdraht (19) aufweisen, der durch einen zweiten Metallstab (20) gebildet ist.

6. Fahrzeug mit mindestens einer Platine (1) nach einem der Ansprüche 1 bis 5.

## Claims

1. Platinum (1) seat belt anchorage for vehicle (2) automotive, having a first part (5) with guidance (6) to guide the sliding of a seat belt (3), platinum (1) with a second part (14) with locking means (16) to lock a seat back (17) on the plate (1), platinum (1) (22) also having a deformable section (22) connecting the first (5) and the second (14) parts, designed to deform, under the effect of a tensile force applied to the locking means (16) and having an intensity greater than a predetermined threshold value, so that the deformation causes a relative rotation of the first (5) and second (14) parts to absorb part of the energy of A shock, the deformable section of which (22) contains a first line of fold (22) in a sheet (4) connecting the first (5) and second (14) parts, the first line of fold (23) constituting an axis around which the relative rotation occurs when the deformable section is deformed (22), characterized as the deformable section (22) contains a second line of fold (25) in sheet (4) forming a triangle (26) with the first line of fold (23) and a lateral edge (24) of sheet (4).

2. Platinum (1) according to one of the claims 1, characterized as the first (5) and second (14) parts are conformed in sheet (4), said sheet (4) also having the deformable section (22).

3. Platinum (1) according to one of the claims 1 to 2, **characterized in that** it also includes a portion of fixation (27), in solidarity with the first part (5), designed to attach the platinum (1) to the body of the vehicle (2).

4. Platinum (1) according to one of the claims 1 to 3, **characterized by** that the means of guidance (6) include a strap thread (7) formed by a first metal rod (9).

5. Platinum according to one of the claims 1 to 4, characterized as the means of locking (16) include a thread of coward (19) formed by a second metal rod (20).

6. Vehicle with at least one platinum (1) according to one of the claims 1 to 5.
